# EUROPÄISCHE PATENTSCHRIFT

(11) **EP 1 077 038 B1**
(45) Veröffentlichungstag und Bekanntmachung des Hinweises auf die Patenterteilung: **09.07.2003**
(21) Anmeldenummer: 00117107.3
(22) Anmeldetag: 09.08.2000
(51) Int. Cl.: A47B 47/00, F16B 12/02, A47B 87/02

(54) **Regalsystem**
Shelf system
Système d'étagères

(30) Priorität: 18.08.1999 DE 19939224
(43) Veröffentlichungstag der Anmeldung: 21.02.2001
(73) Patentinhaber: Bernklau, Willy, 10405 Berlin (DE)
(72) Erfinder: Bernklau, Willy, 10405 Berlin (DE)

(56) Entgegenhaltungen:
- CH-A- 406 065
- US-A- 1 381 501
- US-A- 4 094 417
- US-A- 4 447 096
- US-A- 4 509 806
- US-A- 4 867 320

## Beschreibung

Die Erfindung betrifft ein Regalsystem mit den Merkmalen des Oberbegriffs des Patentanspruchs 1. Regalsysteme dieser Art sind bekannt (DE 196 27 802 A1 und DE 198 07 413 A1). Bei diesen bekannten Regalsystemen sind die Seitenteile jeweils an einem Paar von im Abstand aufgestellten längsgeschlitzten Hohlprofilen in beliebiger Höhe mittels Klemmschraubenverbindungen fest verbindbar, deren Schraubbolzen durch die Längschlitze der Hohlprofile ragen und deren Köpfe oder Muttern hinter die Längsschlitze greifen. Die Klemmfixierung wird durch Anziehen des entsprechenden Gegenelementes der Schraubverbindung erzielt. Die Fachböden liegen auf den Seitenteilen auf und sind gegen seitliches Verschieben in üblicher Weise gesichert, z.B. durch Stift-/Lochverbindungen (DE 198 07 413 A1). Die bekannten Regalsysteme sind zwar hinsichtlich der Höhen der Fachböden individuell beliebig variierbar. Sie bedürfen jedoch vieler Einzelteile und einer aufwendigen Montage.

Der Erfindung liegt die Aufgabe zugrunde, ein Regalsystem der eingangs beschriebenen Art zu schaffen, das weniger Einzelteile hat, leicht zu montieren ist und sich gleichwohl in montiertem Zustand durch eine hohe Stabilität auszeichnet.

Zur Lösung dieser Aufgabe dient Patentanspruch 1.

Die in Hohlprofile eingeschobenen Seitenteile definieren die Regaltiefe eines gemäß der Erfindung aufgebauten Regals. Dadurch, daß keine Fixierung der Seitenteile an den Hohlprofilen vorgesehen ist, entfallen Verbindungsmittel wie Schrauben und Muttern oder sonstige Klemmverbindungen, die zusätzliche Bauteile und zusätzlichen Montageaufwand erfordern. Die Höhenfixierung der Seitenteile wird allein durch ihre in Profillängsrichtung gesehen lose Auflage auf den jeweils darunter befindlichen Fachböden besorgt.

Aufgrund des Erfindungskonzeptes ist es möglich, die Seitenteile einschließlich ihrer mit den Längsschlitzen der Hohlprofile formschlüssig zusammenwirkenden Enden einstückig zu gestalten. Bei einer bevorzugten Ausführung der Erfindung ist dies durch Vorsehen beidseitiger, über die Höhe der Seitenteile durchgehender Nuten erreicht, welche größere Breite als die Profilwandstärke und eine solche Tiefe haben, daß der zwischen den Nutengründen verbleibende Steg der Seitenteile kleinere Dicke als die Breite der Längsschlitze hat, so daß die Seitenteile mit den Nuten in die Längsschlitze zweier ein Paar bildender, im Abstand der Seitenteillänge aufgestellte Hohlprofile eingeschoben werden können, um so einen Verband dieser Teile herzustellen.

Die in Höhenrichtung jeweils zwischen zwei oder mehr Seitenteilen anzuordnenden Fachböden werden mit ihren Ausnehmungen ebenfalls auf die Profile aufgeschoben. Mittels dieser Ausnehmungen halten die Fachböden die Hohlprofile in fixiertem seitlichen Abstand voneinander. Bevorzugt ist dabei gemäß einer weiteren Ausgestaltung der Erfindung, daß die Ausnehmungen von den Längskanten der Fachböden nach innen gehen und ein lichtes Öffnungsmaß in der Ebene der Längskante aufweisen, welches bei der Montage der Fachböden auf den Hohlprofilen eine zur Längsachse der Hohlprofile geneigte Bewegung zuläßt. Dies ermöglicht, daß Fachböden nicht notwendig von oben auf die stehenden Profile in deren Längsrichtung aufgeschoben werden müssen sondern auch in Schräglage seitlich zwischen die Paare Hohlprofile eingeschoben und dann in ihre montierte horizontale Endstellung geklappt werden können.

Eine besonders einfache Ausgestaltung des Regalsystems zeichnet sich dadurch aus, daß die Seitenteile sämtlich gleiche Höhe haben. Damit beschränken sich die Grundelemente des erfindungsgemäßen Regalsystems auf insgesamt drei Elemente, nämlich die Hohlprofile, die Seitenteile und die Fachböden, die einen überraschend stabilen Verbund in montiertem Zustand ergeben, derart, daß auch eine stabile Aufstellung des Regals ohne Abstützung an einer Wand, das heißt frei im Raum, möglich ist.

Die Stabilität wird erhöht, wenn gemäß einer weiteren Ausbildung der Erfindung mindestens ein Rückenteil vorgesehen ist, das die gleiche Höhe wie die Seitenteile und eine Länge hat, die etwa dem lichten Maß zwischen zwei ein Fach seitlich begrenzenden Seitenteilen entspricht, und das in voll eingeschobenem Zustand an den beiden hinteren Hohlprofilen eines Faches anstößt. Ein solches Rückenteil läßt sich also einfach durch Einschieben in ein Fach des wie oben beschrieben vormontierten Regals endmontieren.

Das Rückenteil stellt in einfachster Form ein Platte dar, kann jedoch vielförmige Gestalt haben, zum Beispiel einen Korpus zur Halterung von Türen, eines Auszuges, einer Schublade oder dgl. bilden.

Das Regalsystem nach der Erfindung läßt sich wie oben beschrieben durch abwechselndes Aufschieben von Seitenteilen und Fachböden auf mindestens vier Hohlprofile montieren.

Soll vermieden werden, daß die untersten Elemente, seien es Seitenteile oder Fachböden, auf dem Boden zu liegen kommen, können gemäß einer weiteren Ausgestaltung der Erfindung an den unteren Enden der Hohlprofile Mittel angeordnet sein, auf denen die untersten Regalelemente aufliegen. Diese Mittel können beispielsweise dadurch gebildet sein, daß der Längsschlitz nicht über die ganze Länge der Hohlprofile durchgehend ist sondern kurz vor deren Fuß in einer Höhe endet, welche den Abstand der untersten Regalelemente (zum Beispiel Seitenteile) vom Boden definiert. Besonders einfach ist jedoch, wenn diese Mittel zur Abstützung der untersten Seitenteile von in die Hohlprofile eingesteckten Buchsen gebildet sind.

Weitere vorteilhafte Ausgestaltungen der Erfindung sind in den weiteren Unteransprüchen unter Schutz gestellt.

Ein bedeutender Vorteil eines Regalsystems nach der Erfindung liegt darin, daß es sich ohne jeden Einsatz von Werkzeugen allein durch Schieben, Stecken und Drücken zu einem stabilen Verbund montieren läßt.

Mit dem beschriebenen System lassen sich außer Regalen auch andere Möbel, wie Schränke, Kommoden und Kombinationsmöbel aufbauen, welche Regal- und Schrankteile miteinander verbinden. Die in dieser Beschreibung zur Vereinfachung verwendete Bezeichnung "Regalsystem" soll solche anderen Möbel mitumfassen.

Die Erfindung ist im folgenden anhand schematischer Zeichnungen an Ausführungsbeispielen mit weiteren Einzelheiten näher erläutert. Es zeigen:

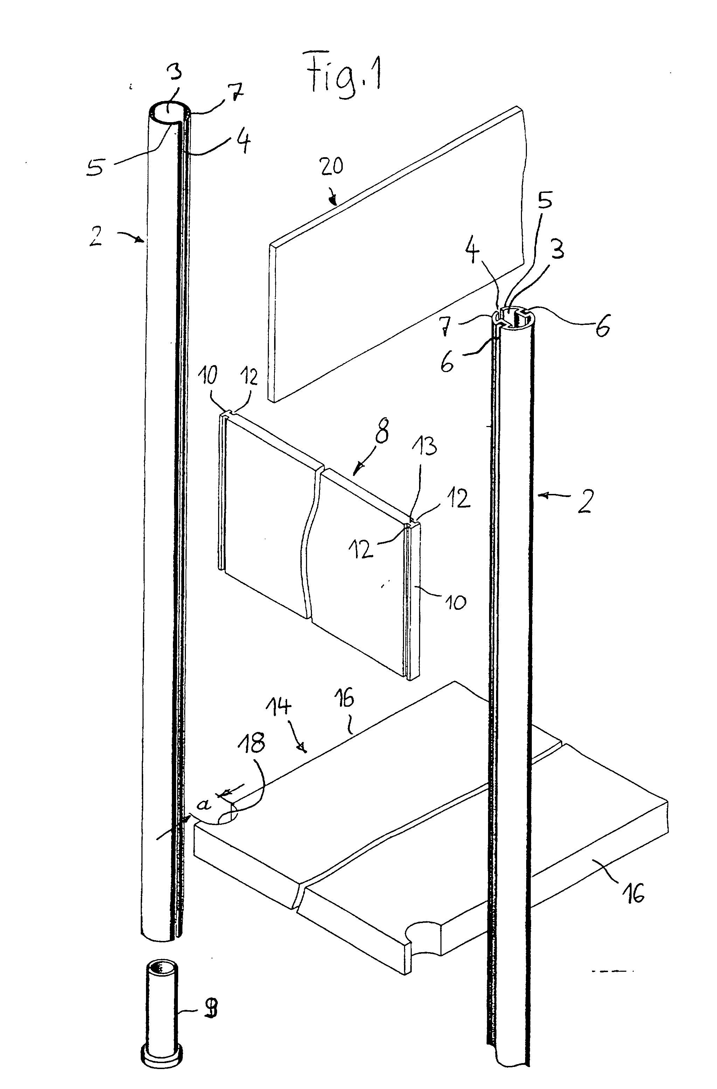

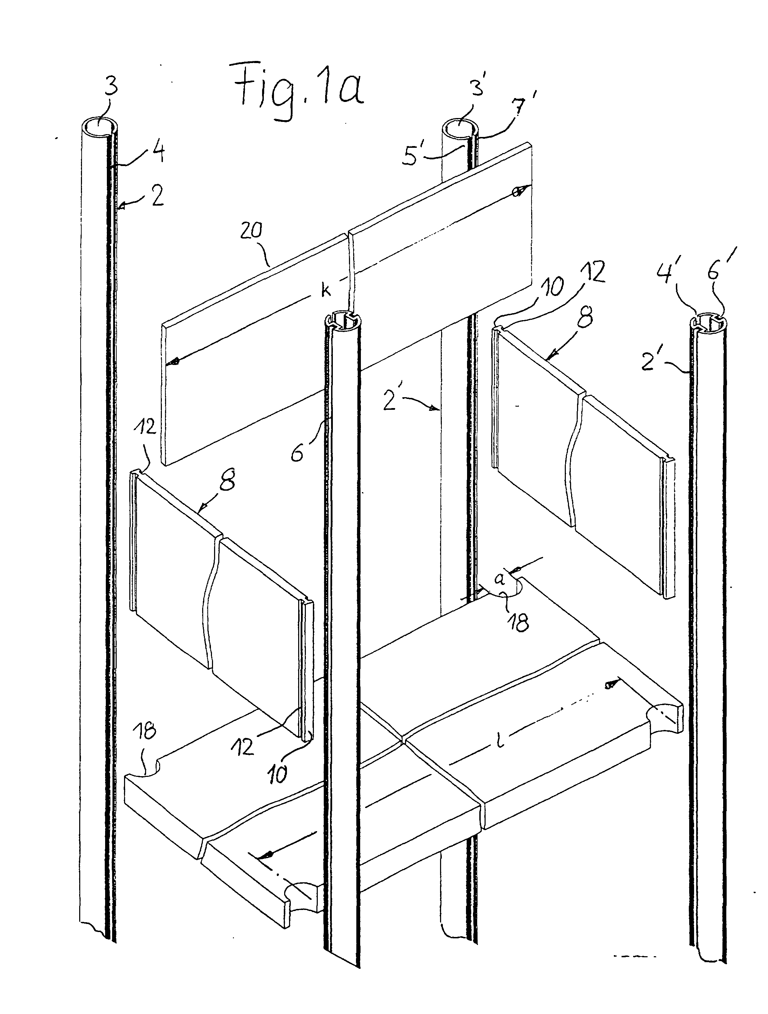

- Fig. 1: eine perspektivische, auseinandergezogene Darstellung der wesentlichen Teile eines Regalsystems gemäß der Erfindung;
- Fig. 1 a: in einer Darstellung wie Figur 1 sämtliche, zum Aufbau eines erfindungsgemäßen Regals mit nur einer Fachreihe nötigen Teile;
- Fig. 2: in einer perspektivischen Darstellung ähnlich Fig. 1 ein Regalsystem mit den Teilen gemäß Fig. 1 bzw. 1a in einem Zustand während der Montage;
- Fig. 3 bis 6: vier Beispiele für fertig montierte Regale eines Regalsystems nach der Erfindung.

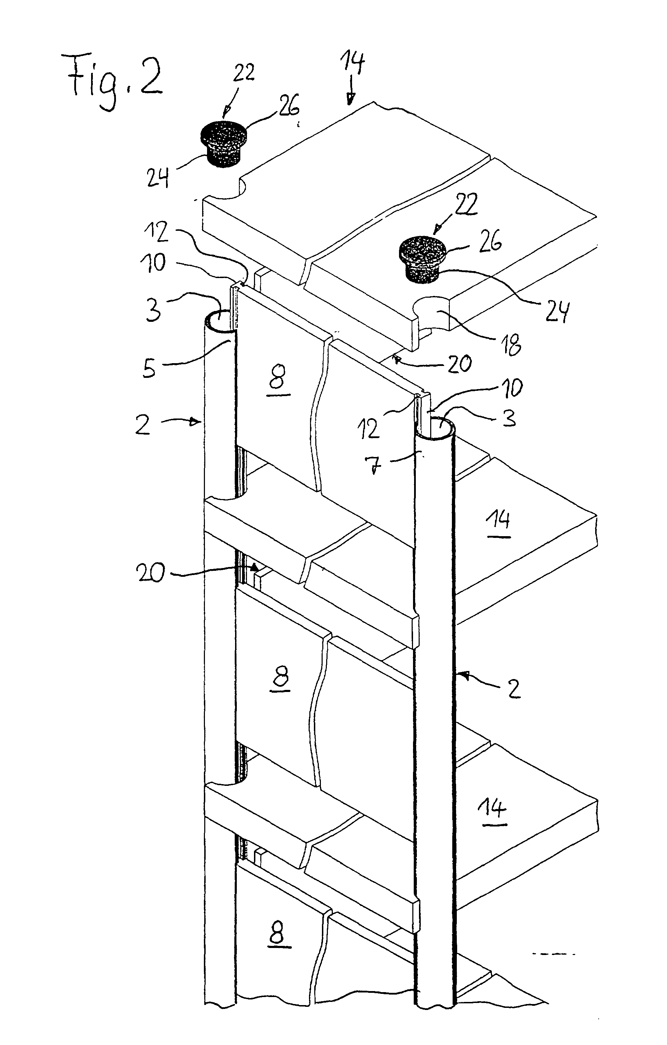

Die wesentlichen Bauelemente eines Regalsystems gemäß der Erfindung sind aus den Figuren 1, 1a und 2 ersichtlich. Dabei sind Hohlprofile in Form von kreiszylindrischen Rohren 2 mit über die Länge durchgehenden Längsschlitzen 4 versehen. Diese Hohlprofile bestehen aus Metall, wie einer Aluminiumlegierung, oder aus einem Kunststoff hoher Festigkeit. Zusätzlich kann eines oder mehrere dieser Hohlprofile mit gegenüberliegenden, durchgehenden Längsnuten 6 versehen sein, die zur Aufnahme jeweils eines mit einer Metallader ausgestatteten Kunststoffprofiles dienen. Die Metalladern dienen der Stromversorgung für ein Niedervolt-Lichtsystem (nicht gezeigt).

Seitenteile sind insgesamt mit der Bezugszahl 8 versehen. Diese Seitenteile haben nahe ihrer beiden Enden 10 gegenüberliegende Längsnuten 12, die sich über die Höhe der Seitenteile 8 erstrecken. Die Breite der Längsnuten 12 ist geringfügig größer als die Profilwandstärke der Rohre 2, und die Tiefe der Längsnuten 4 ist so bemessen, daß der verbleibende Steg 13 geringere Dicke als die Breite der Längsschlitze 4 hat.

Fachböden sind insgesamt mit der Bezugszahl 14 belegt. Diese Fachböden haben längs ihrer Längskanten 16 halbkreisförmige Ausnehmungen 18 in Abständen 1 (Figur 1 a), die den Abständen zweier ein Regalfach seitlich begrenzenden Seitenteile 8 entsprechen. Diese Ausnehmungen 18 sind in der Tiefe so bemessen, daß sie etwa den halben Umfang der Rohre 2 aufnehmen können.

Schließlich sind in den Figuren 1, 1a und 2 plattenförmige Rückenteile 20 gezeigt, deren Länge k (Fig. 1a) dem lichten Maß zwischen zwei ein Fach eingrenzenden Seitenteilen entspricht. Da eine ausreichende Stabilität eines mit den Regalelementen 2, 8 und 14 aufgebauten Regalsystems gegeben ist, können die Rückenteile 20 auch ganz oder teilweise weggelassen sein, was insbesondere dann sinnvoll sein kann, wenn ein Regal gemäß der Erfindung als lichtdurchlässiger Raumteiler eingesetzt werden soll.

Figur 2 veranschaulicht die Montage eines Regals mit den beschriebenen Grundelementen gemäß der Erfindung wie folgt:

Zwei Rohre 2 werden mit ihren Längsschlitzen 4 einander gegenüberliegend in einem Abstand angeordnet, der in etwa der Breite der Fachböden 14 und der Länge der Seitenteile 8 entspricht. Dann werden die Seitenteile 8 und die Fachböden 14 wie folgt montiert: die Seitenteile werden von oben auf die Rohre 2 so aufgeschoben, daß die Rohre 2 mit ihren durch den Längsschlitz 4 getrennten Flügeln 5, 7 klauenartig in die Nuten 12 greifen, derart, daß die Seitenteile 8, wie in Figur 2 gezeigt, mit ihren Enden 10 innerhalb der Rohre zu liegen kommen, so daß die Seitenteile 8 den Abstand der Rohre 2 fixieren. Die Fachböden 14 werden durch Aufschieben auf die Rohre mit ihren Ausnehmungen 18 oder durch nachträgliches seitliches Einschieben in Schräglage und Klappen in horizontale Lage jeweils zwischen zwei übereinander angeordneten Seitenteilen 8 montiert , derart, daß in fertig montierter Anordnung die Seitenteile 8 auf Fachböden 14 und diese wiederum auf den Oberkanten der darunter liegenden Seitenteile 8 abgestützt sind. Die untersten Fachböden oder Seitenteile können durch Mittel oberhalb des Fußbodens abgestützt sein, welche in oder an den Füßen der Hohlprofile angeordnet sind. Beispielsweise können unterste Seitenteile durch in die Hohlprofile eingesteckte Buchsen 9 (Fig. 1) in gewünschter Höhe oberhalb des Fußbodens abgestützt sein.

Die Rückenteile 20 lassen sich einfach durch Eindrücken in die gebildeten Fächer gegen die beiden hinteren (oder vorderen) Rohre 2 der beiden Rohrpaare montieren. Sie erhöhen in montiertem Zustand die Stabilität des Gesamtaufbaus.

Aus Figur 1a ist ersichtlich, daß zum Aufbau eines kleinen Regales gemäß der Erfindung mindestens zwei Rohrpaare mit Rohren 2, wie in der Figur 1a gezeigt, erforderlich sind. Das zweite, in den Figuren 1 und 2 nicht gezeigte, Rohrpaar mit Rohren 2', 2' ist in einem Abstand von dem gezeichneten Rohrpaar angeordnet, welcher der Länge k der Rückwand 20 entspricht.

Der oberste Fachboden 14 kann gemäß Figur 2 durch Niederhalter 22 in Form von Stopfen 22 gehalten sein, welche mit die Ausnehmungen 18 durchdringenden Zapfen 24 formschlüssig in die oberen Öffnungen 3 der Rohre 2 eingesteckt sind und den obersten Fachboden 14 mit den Unterseiten von Flanschen 26 niederhalten, welche die Ränder der Ausnehmungen 18 überlappen.

Es ist ersichtlich, daß die Grundelemente, nämlich die Rohre 2, die Seitenteile 8, die Fachböden 14 und die Rückenteile 20, ohne jede Befestigungsmittel und ohne Werkzeuge miteinander zu einem stabilen Verband allein durch Stecken, Schieben und Drücken zusammenfügbar sind.

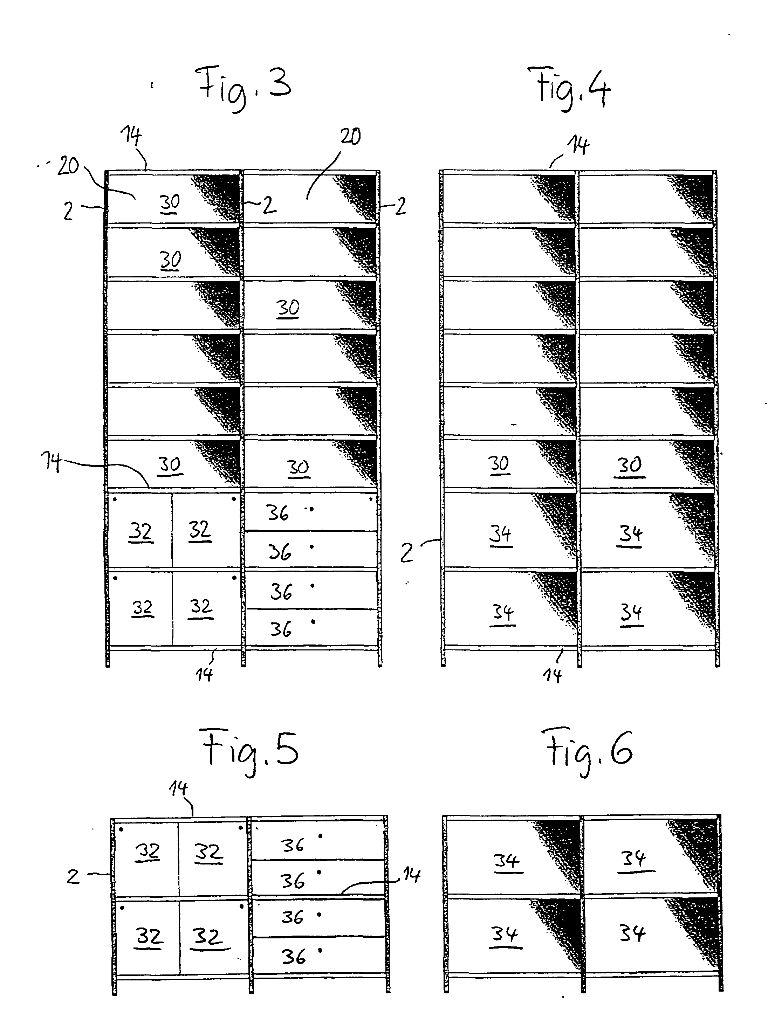

Beispiele für gemäß der Erfindung aufgebaute Regale sind in den Figuren 3 bis 6 gezeigt. Dabei sind jeweils Anordnungen mit insgesamt drei Paaren Rohre 2 dargestellt. Selbstverständlich lassen sich Regale mit beliebig vielen Rohrpaaren aufbauen. Das Regal nach Figur 3 hat zwei vertikale Reihen von Fächern 30, die seitlich jeweils durch ein nicht gezeigtes Seitenteil 8 begrenzt sind, mit dazwischen angeordneten Fachböden 14, die sich einheitlich über die gesamte Regalbreite erstrecken. Im unteren Bereich des Regals nach Figur 3 sind in der linken Hälfte Türen 32 vorgesehen, welche jeweils fachweise an einem nicht dargestellten Korpus angeschlagen sind, zu dem eine Rückwand 20 gehören kann. Die Höhe der mit den Türen 32 ausgestatteten Fächer ist größer als diejenige der offenen Fächer 30, was durch entsprechend höhere Seitenteile bewirkt sein kann. Es können jedoch auch Fächer doppelter Höhe wie diejenige der offenen Fächer 30 dadurch gebildet sein, daß gleiche Seitenteile, wie für die Fächer 30 verwendet, direkt ohne Zwischenanordnung eines Fachbodens aufeinander in die Rohre 2 der Rohrpaare eingeschoben sind (nicht gezeigt). In der rechten Hälfte des unteren Regalbereiches sind vier Schübe 36 übereinander in Gruppen von jeweils zwei Schüben angeordnet, wobei diese Gruppen durch einen dazwischen befindlichen Fachboden 14 getrennt sind.

Die Ausführung nach Figur 4 unterscheidet sich lediglich dadurch, daß die Türen 32 und die Schübe 36 im unteren Bereich fehlen. Im unteren Bereich sind vier Fächer 34 etwa doppelter Höhe wie die darüber angeordneten Fächer 30 vorgesehen.

Figur 5 zeigt ein Regal geringer Höhe mit im linken Bereich durch Türen 32 verschließbaren Fächern und im rechten Bereich mit Schüben 36 entsprechend dem unteren Teil des Regals nach Figur 3.

Figur 6 zeigt ein Regal geringer Höhe mit offenen Fächern 34 gemäß dem unteren Teil des Regals nach Figur 4.

Die Seitenteile 8, Fachböden 14 und die Rückenteile bestehen vorzugsweise aus einem Holzwerkstoff, wie MDF.

Der Fachmann erkennt, daß sich nicht nur Regale sondern auch andere Möbel mit Facheinteilungen, wie Schränke, Kommoden und Kombinationsmöbel großer Variationsbreite mit dem beschriebenen Regalsystem aufbauen lassen.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein können.

## Patentansprüche

1. Regalsystem mit mindestens zwei Paaren Hohiprofile (2), von denen jedes einen mindestens nahezu über seine Länge reichenden, hinterschnittenen Längsschlitz (4) hat, mit Seitenteilen (8), deren Enden (10) so gestaltet sind, daß sie jeweils formschlüssig durch und hinter den Längsschlitz (4) des betreffenden Hohlprofiles greifen, jedoch Längsverschieblichkeit gegenüber den Hohlprofilen zulassen, und mit auf den Seitenteilen (8) abgestützten Fachböden (14), **dadurch gekennzeichnet, daß** die Seitenteile (8) in Längsrichtung der Hohlprofile (2) an diesen nicht höhenfixierbar sondern auf den jeweils darunter liegenden Fachböden (14) lose auflegbar sind und daß die Fachböden (14) im Bereich ihrer Kanten (16) Ausnehmungen (18) haben, die Durchlässe für die Hohlprofile (2) bilden.

2. Regalsystem nach Anspruch 1, **dadurch gekennzeichnet, daß** die Seitenteile (8) nahe ihren Enden beidseitig gegenüberliegende, über die Höhe der Seitenteile durchgehende Nuten (12) haben, welche größere Breite als die Wandstärke der Hohlprofile (2) und eine solche Tiefe haben, daß der zwischen den Nutengründen verbleibende Steg (13) kleinere Dicke als die Breite der Längsschlitze (4) hat.

3. Regalsystem nach Anspruch 1 oder 2, **dadurch gekennzeichnet, daß** die Ausnehmungen (18) von den Längskanten (16) der Fachböden (14) nach innen gehen und eine lichtes Öffnungsmaß (a) in den Ebenen der Längskante(n) aufweisen, welches bei der Montage der Fachböden auf den Hohlprofilen eine zur Längsachse der Hohlprofile geneigte Bewegung zuläßt.

4. Regalsystem nach einem der vorherigen Ansprüche, **dadurch gekennzeichnet, daß** die Seitenteile (8) sämtlich gleiche Höhe haben.

5. Regalsystem nach Anspruch 4, **dadurch gekennzeichnet, daß** mindestens ein Seitenteil (8) ohne Zwischenschaltung eines Fachbodens (14) von dem darunterliegenden Seitenteil abgestützt ist.

6. Regalsystem nach einem der vorherigen Ansprüche, **dadurch gekennzeichnet, daß** mindestens ein Rückenteil (20) vorgesehen ist, das die gleiche Höhe wie die Seitenteile und eine Länge hat, die etwa dem lichten Maß zwischen zwei ein Fach (30, 34) seitlich begrenzenden Seitenteilen (8) entspricht, und das an den beiden hinteren Hohlprofilen (2) eines Faches anstößt.

7. Regalsystem nach einem der vorherigen Ansprüche, **dadurch gekennzeichnet, daß** mindestens ein Hohlprofil (2) eine Längsnut (6) zur Aufnahme eines Stromleiters aufweist.

8. Regalsystem nach einem der vorherigen Ansprüche, **dadurch gekennzeichnet,daß** mit den oberen Enden (bei 3) der Hohlprofile (2) zusammenwirkende Niederhalter (22) für die Fachböden (14) vorgesehen sind.

9. Regalsystem nach einem der vorherigen Ansprüche, **dadurch gekennzeichnet, daß** an den unteren Enden der Hohlprofile (2) höhenverstellbare Füße vorgesehen sind.

10. Regalsystem nach einem der vorherigen Ansprüche, **dadurch gekennzeichnet, daß** an den unteren Enden der Hohlprofile Mittel, insbesondere in die Enden eingebrachte Buchsen, angeordnet sind, auf denen die untersten Regalelemente aufliegen.

## Claims

1. Shelf system with at least two pairs of hollow sections (2) each with a longitudinal rear-cut slot (4) along at least practically its entire length, with sides (8) the ends (10) of which are designed so that they form fit into and behind the longitudinal slot (4) of the relevant hollow section, yet permit longitudinal displacement of the hollow section and shelves (14) supported by sides (8) thus **characterised in that** the sides (8) are not fixed in height to the hollow sections (2) along the latter's longitudinal plane yet rest loosely on the respective shelf (14) beneath and that the shelves (14) features recesses (18) at their edges into which the hollow sections (2) fit.

2. Shelf system to claim 1, thus **characterised in that** the sides (8) feature continuous grooves (12) close to their ends at either side along their entire height which are wider than the wall thickness of the hollow sections (2) and so deep that the remaining ridge (13) between the groove bases is narrower than the width of the longitudinal slots (4).

3. Shelf system to claim 1 or 2, thus **characterised in that** the recesses (18) on the longitudinal edges (16) of the shelves (14) face inwards and feature a clear aperture dimension (a) on longitudinal edge(s) planes which, when mounting the shelves on the hollow sections, permits an inclined movement in relation to the hollow section longitudinal axis.

4. Shelf system to one of the previous claims thus **characterised in that** the sides (8) are all of the same height.

5. Shelf system to claim 4 thus **characterised in that** at least one side (8) is supported by the side below without intersection by a shelf (14).

6. Shelf system to one of the previous claims thus **characterised in that** at least one rear panel (20) is provided that features the same height as the sides and a length equivalent to approx. the clearance between two sides (8) which laterally limit one compartment (30, 34) and that meets with the two rear hollow sections (2) of a compartment.

7. Shelf system to one of the previous claims thus **characterised in that** at least one hollow section (2) features a longitudinal slot (6) to accommodate a power cable.

8. Shelf system to one of the previous claims thus **characterised in that** effective holders (22) are featured at the top ends (at 3) of the hollow sections (2) for the shelves (14).

9. Shelf system to one of the previous claims thus **characterised in that** height-adjustable feet are featured at the bottom ends of the hollow sections (2).

10. Shelf system to one of the previous claims thus **characterised in that** at the bottom ends of the hollow sections, components, in particular bushings inserted in the ends, are provided on which the bottom shelf elements may rest.

## Revendications

1. Système d'étagères à deux paires minimum de profilés creux (2), dont chacun possède au moins une fente longitudinale (4) placée à l'arrière sur sa quasi-longueur, doté de parties latérales (8) dont les extrémités sont configurées de sorte qu'elles s'insèrent chacune par liaison mécanique à l'arrière de la fente longitudinale (4) du profilé creux correspondant, tout en autorisant une possibilité de coulisser dans le sens de la longueur par rapport au profilé creux, et doté de tablettes (14) prenant appui sur les parties latérales (8) **caractérisées par le fait que** les parties latérales (8) dans le sens de la longueur des profilés creux (2) ne peuvent pas être fixés en hauteur à ceux-ci mais peuvent être posés librement sur les tablettes (14) placées en dessous et que les tablettes (14) sont dotées d'entailles (18) au niveau de leurs arêtes (16) qui forment des gorges destinées aux profilés creux (2).

2. Système d'étagères selon la revendication 1, **caractérisé par le fait que** les parties latérales (8) à proximité de leurs extrémités sont dotées des deux côtés de rainures (12) continues de part et d'autre sur la hauteur des parties latérales, d'une largeur supérieure à l'épaisseur de la paroi des profilés creux (2) et d'une profondeur telle que la nervure (13) restante entre les fonds des rainures a une épaisseur inférieure à la largeur des fentes longitudinales (4).

3. Système d'étagères selon la revendication 1 ou 2, **caractérisé par le fait que** les entailles (18) des arêtes longitudinales (16) des tablettes (14) s'incurvent vers l'intérieur et présentent une cote d'ouverture libre (a) dans les plans de l'arête longitudinale (des arêtes longitudinales), qui autorise lors du montage des tablettes sur les profilés creux un mouvement incliné par rapport à l'axe longitudinal des profilés creux.

4. Système d'étagères selon l'une des revendications précédentes, **caractérisé par le fait que** les parties latérales (8) ont toutes la même hauteur.

5. Système d'étagères selon la revendication 4, **caractérisé par le fait qu'**au moins une partie latérale (8) est soutenue par la partie située en dessous sans l'intervention de l'une des tablettes (14).

6. Système d'étagères selon les revendications précédentes, **caractérisé par le fait qu'**au moins une partie arrière (20) est prévue pour correspondre à la même hauteur que la partie latérale et qu'elle est d'une longueur égale à peu près à la cote libre entre deux parties latérales (8) délimitant un casier (30, 34), et qu'elle est jointive avec les deux profilés creux arrière (2) d'un casier.

7. Système d'étagères selon les revendications précédentes, **caractérisée par le fait qu'**au moins un profilé creux (2) présente une rainure longitudinale (6) pour le logement d'un câble électrique.

8. Système d'étagères selon les revendications précédentes, **caractérisé par le fait que** des serre-flans (22) à effets conjugués sont prévus pour les tablettes (14) aux extrémités supérieures (sur 3) des profilés creux (2).

9. Système d'étagères selon les revendications précédentes, **caractérisé par le fait que** des pieds réglables en hauteur sont prévus aux extrémités inférieures des profilés creux (2).

10. Système d'étagères selon les revendications précédentes, **caractérisé par le fait que** des axes sont disposés aux extrémités inférieures des profilés creux, en particulier des manchons introduits dans les extrémités, sur lesquels reposent les éléments les plus bas des étagères.
